# NEUE EUROPÄISCHE PATENTSCHRIFT

(11) **EP 2 927 040 B2**
(45) Veröffentlichungstag und Bekanntmachung des Hinweises auf die Entscheidung über den Einspruch: **11.09.2019**
(45) Hinweis auf die Patenterteilung: 22.06.2016
(21) Anmeldenummer: 15161345.2
(22) Anmeldetag: 27.03.2015
(51) Int. Cl.: B60K 15/04, B60K 13/04

(54) **BEFÜLLKOPF FÜR EINEN FLÜSSIGKEITSTANK**
FILLING HEAD FOR A LIQUID TANK
TÊTE DE REMPLISSAGE POUR UN RÉSERVOIR DE LIQUIDE

(30) Priorität: 04.04.2014 DE 102014104822
(43) Veröffentlichungstag der Anmeldung: 07.10.2015
(73) Patentinhaber: VERITAS AG, 63571 Gelnhausen (DE)
(72) Erfinder: Desch, Christian, 63599 Biebergemünd (DE)
(74) Vertreter: Patentship Patentanwaltsgesellschaft mbH

(56) Entgegenhaltungen:
- WO-A1-2013/092109
- DE-A1-102009 029 362
- DE-A1-102009 029 362
- DE-B4-102011 009 745
- DE-U1-202011 109 524
- GB-A- 2 066 423
- DRUMMER, D.: "Verarbeitung und Eigenschaften kunststoffgebundener Dauermagnete", Dissertation. Technische Fak. der Univ. Erlangen-Nürnberg, Lehrstuhl für Kunststoftechnik (LKT), 2004,

## Beschreibung

Die vorliegende Erfindung betrifft einen Befüllkopf für einen Flüssigkeitstank in einem Kraftfahrzeug.

Die gattungsbildende Druckschrift DE 10 2011 009 745 B4 beschreibt einen Einfüllstutzen für einen Nebenflüssigkeitsbehälter für ein Kraftfahrzeug mit einem einstückigen Stutzengehäuse, das einen Mundlochstutzen für ein Zapfventil und einen Einfüllkanal in den Behälter definiert, bei dem innerhalb des Stutzengehäuses eine Aufnahmestruktur für ein Zapfventil vorgesehen ist. Eine einstückige Einlauftülle bildet sowohl einen trichterförmig ausgebildeten Einlaufkanal für die einzufüllende Flüssigkeit als auch einen Teil eines Einfüllstutzen.

Die Druckschrift DE 10 2009 029 362 A1 offenbart einen Behälter zur Aufnahme eines Kraft- und/oder Betriebsstoffes für Fahrzeuge, mit einem Einfüllstutzen zur Aufnahme einer Zapfpistole und mit einem Magneten zur Vermeidung einer Fehlbetankung.

Durch die einstückige Ausgestaltung der Einlauftülle mit dem Stutzengehäuse ist diese nur für einen bestimmten Einfüllstutzen einer vorgegebenen Geometrie verwendbar. Für einen Einfüllstutzen anderer Geometrie ist es daher erforderlich, mit großem Aufwand anderes, kompliziertes Spritzgusswerkzeug herzustellen.

Um Fehlbetankungen zwischen einem Kraftstoff und einer wässrigen Harnstofflösung zu verhindern, sind Harnstoff-Zapfventile für Kraftfahrzeuge mit einem Magnetschalter ausgestattet, der bewirkt, dass das Harnstoff-Zapfventil ohne einen im Befüllkopf integrierten Magneten nicht auslöst. Zu diesem Zweck umfassen gängige Befüllköpfe oftmals einen metallischen Ring aus seltenen Erden, der ein permanentes Magnetfeld erzeugt.

Es ist die der Erfindung zugrundeliegende Aufgabe, einen Befüllkopf für ein Zapfventil anzugeben, der mit geringem Aufwand und geringerem Gewicht herstellbar ist.

Diese Aufgabe wird durch einen Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß der Erfindung wird die Aufgabe durch einen Befüllkopf mit einem Einfüllstutzen für ein Zapfventil gelöst, mit einem Magnetelement, das aus einem magnetischen Kunststoffmaterial gebildet ist, zum Freigeben einer Zapfventilautomatik des Zapfventils. Das Magnetelement dient dazu, das Zapfventil auszulösen. Der Befüllkopf ist beispielsweise ein Befüllkopf für einen Flüssigkeitstank für eine wässrige Harnstofflösung (SCR-Tank). Das Kunststoffmaterial ist beispielsweise ein thermoplastisches Kunststoffmaterial. Dadurch wird beispielsweise der technische Vorteil erreicht, dass das Magnetelement durch Spritzgießen in einer beliebigen Form hergestellt werden kann und eine hohe Medienbeständigkeit aufweist. Zudem wird eine Korrosion, wie diese bei der Verwendung von seltenen Erden auftritt, verhindert.

In einer vorteilhaften Ausführungsform des Befüllkopfes ist das Magnetelement ein Ring, der um den Einfüllstutzen angeordnet ist. Dadurch wird beispielweise der technische Vorteil erreicht, dass ein starkes Magnetfeld im Inneren des Einfüllstutzens erzeugt werden kann.

Erfindungsgemäss umfasst der Befüllkopf einen zusammengesetzten Tauchrohrformkörper im Inneren des Befüllkopfes, der ein erstes Formkörperteil zum Bilden eines Einfüllstutzens für eine Befülldüse und ein zweites Formkörperteil zum Formen eines Flüssigkeitsstrahls der Befülldüse umfasst, das an dem ersten Formkörperteil befestigt ist. Der Tauchrohrformkörper kann in den Befüllkopf eingesetzt sein. Dadurch wird beispielsweise der technische Vorteil erreicht, dass ein modularer Aufbau des Befüllkopfes realisiert wird, so dass unterschiedlich gestaltete Befüllköpfe durch eine Kombination unterschiedlicher Teile gebildet werden können. Daneben wird der Vorteil erreicht, dass ein Flüssigkeitsstrahl unterschiedlicher Zapfpistolen vereinheitlicht wird und eine Füllgeschwindigkeit erzielt werden kann.

In einer weiteren vorteilhaften Ausführungsform bildet der Tauchrohrformkörper, insbesondere das erste Formteil und das zweite Formteil, mit einer Gehäusewand des Befüllkopfes ein Flüssigkeitsreservoir zum Aufnehmen einer Flüssigkeitsmenge. Dadurch wird beispielsweise der technische Vorteil erreicht, dass der Befüllkopf eine aus der Befülldüse beim Nachtanken ausfließende Menge aufnehmen kann.

In einer weiteren vorteilhaften Ausführungsform umfasst das zweite Formkörperteil eine umlaufende kreisförmige Schwallwand zum Vermindern einer Flüssigkeitsströmung in das Flüssigkeitsreservoir. Dadurch wird beispielsweise der technische Vorteil erreicht, dass sich das Flüssigkeitsreservoir langsam mit Flüssigkeit füllt und ein Austreten von Flüssigkeit verhindert wird.

In einer weiteren vorteilhaften Ausführungsform umfasst die umlaufende Schwallwand eine Durchtrittsöffnung für die Flüssigkeitsströmung in das Flüssigkeitsreservoir. Dadurch wird beispielsweise der technische Vorteil erreicht, dass eine Flüssigkeitsströmung über die Größe der Öffnung beeinflusst werden kann.

In einer weiteren vorteilhaften Ausführungsform umfasst das erste Formkörperteil eine Öffnung zum Auslassen von Luft aus dem Flüssigkeitsreservoir. Dadurch wird beispielsweise der technische Vorteil erreicht, dass Bildung eines Luftpolsters verhindert wird, das ein Einfließen von Flüssigkeit in das Flüssigkeitsreservoir erschwert.

In einer weiteren vorteilhaften Ausführungsform ist die Öffnung in der Nähe einer Verbindung des ersten Formkörperteils mit dem Befüllkopf gebildet. Dadurch wird beispielsweise der technische Vorteil erreicht, dass sich die Öffnung an einer Stelle befindet, an der keine Flüssigkeit durch die Öffnung austreten kann.

In einer weiteren vorteilhaften Ausführungsform weist der Tauchrohrformkörper eine zylindrische Grundform auf. Dadurch wird beispielsweise der technische Vorteil erreicht, dass der Tauchrohrformkörper mit geringem Materialaufwand und in kompakter Weise gebildet werden kann.

Erfindungsgemäss ist zwischen dem ersten Formkörperteil und dem zweiten Formkörperteil ein Dichtungselement zum Abdichten des Einfüllstutzens eingesetzt. Dadurch wird beispielsweise der technische Vorteil erreicht, dass ein Austreten von Flüssigkeit aus dem Befüllkopf verhindert wird.

In einer weiteren vorteilhaften Ausführungsform läuft das Dichtungselement diagonal um eine Längsachse des Einfüllstutzens herum. Dadurch wird beispielsweise der technische Vorteil erreicht, dass sich die Dichtwirkung des Befüllkopfes durch eine tiefer liegende Dichtung verbessert und Zapfpistolen mit seitlicher Öffnung geschaltet werden können.

In einer weiteren vorteilhaften Ausführungsform läuft das Dichtungselement senkrecht um eine Längsachse des Einfüllstutzens herum. Dadurch wird beispielsweise der technische Vorteil erreicht, dass durch die senkrechte Anordnung des Dichtungselements der gesamte Befüllkopf kleiner konstruiert werden kann. Darüber hinaus kann durch die senkrechte Anordnung des Dichtungselements die Dichtung so positioniert werden, dass bei allen Zapfpistolen die Abschaltautomatik frei ist und somit das Zapfventil um 360° frei rotierend betankt werden kann.

In einer weiteren vorteilhaften Ausführungsform umfasst das erste Formkörperteil oder das zweite Formkörperteil eine Auflagefläche für das Dichtungselement. Dadurch wird beispielsweise ebenfalls der technische Vorteil erreicht, dass die Dichtigkeit des Formkörpers verbessert wird.

In einer weiteren vorteilhaften Ausführungsform umfasst das erste Formkörperteil ein Rastmittel zum Einrasten in dem zweiten Formkörperteil oder das zweite Formkörperteil ein Rastmittel zum Einrasten in dem ersten Formkörperteil. Dadurch wird beispielsweise der technische Vorteil erreicht, dass sich der Tauchrohrformkörper auf einfache Weise zusammensetzen lässt.

In einer weiteren vorteilhaften Ausführungsform umfasst das zweite Formkörperteil einen Anschlagsabschnitt zum Bilden eines Anschlags für die Befülldüse. Dadurch wird beispielsweise der technische Vorteil erreicht, dass ein zu weites Eindringen der Befülldüse in den Befüllkopf verhindert wird und die Position des Magneten zum Schalten gesichert ist.

In einer weiteren vorteilhaften Ausführungsform ist der Tauchrohrformkörper mit dem Befüllkopf verschweißt oder verklebt. Dadurch wird beispielsweise der technische Vorteil erreicht, dass sich eine feste Verbindung zwischen dem Befüllkopf und dem Tauchrohrformkörper ergibt.

In einer weiteren vorteilhaften Ausführungsform umfasst das erste Formkörperteil eine umlaufende Wandung zum seitlichen Umschließen des zweiten Formkörperteils. Dadurch wird beispielsweise der technische Vorteil erreicht, dass beide Formkörperteile formschlüssig ineinandergreifen und eine mechanische Verbindung der beiden Teile verbessert wird.

In einer weiteren vorteilhaften Ausführungsform ist das erste Formkörperteil oder das zweite Formkörperteil ein Kunststoffspritzgussteil. Dadurch wird beispielsweise der technische Vorteil erreicht, dass sich die Formkörperteil auf einfache Weise herstellen lassen.

Ausführungsbeispiele der Erfindung sind in den Zeichnungen dargestellt und werden im Folgenden näher beschrieben.

Es zeigen:
- Fig. 1: eine perspektivische Ansicht eines Befüllkopfes;
- Fig. 2: eine Explosionsdarstellung des Befüllkopfes;
- Fig. 3: eine Querschnittsansicht des Befüllkopfes;
- Fig. 4: eine perspektivische Ansicht eines Tauchrohrformkörpers:
- Fig. 5: eine Querschnittsansicht des Tauchrohrformkörpers mit getrennten Formkörperteilen;
- Fig. 6: eine Querschnittsansicht des Tauchrohrformkörpers mit zusammengesetzten Formkörperteilen;
- Fig. 7: eine weitere Querschnittsansicht des Tauchrohrformkörpers mit zusammengesetzten Formkörperteilen;
- Fig. 8: mehrere Ansichten eines Dichtungselementes;
- Fig. 9: eine Explosionsdarstellung einer weiteren Ausführungsform des Befüllkopfes; und
- Fig. 10: Magnet aus magnetisierbarem Kunststoffcompound.

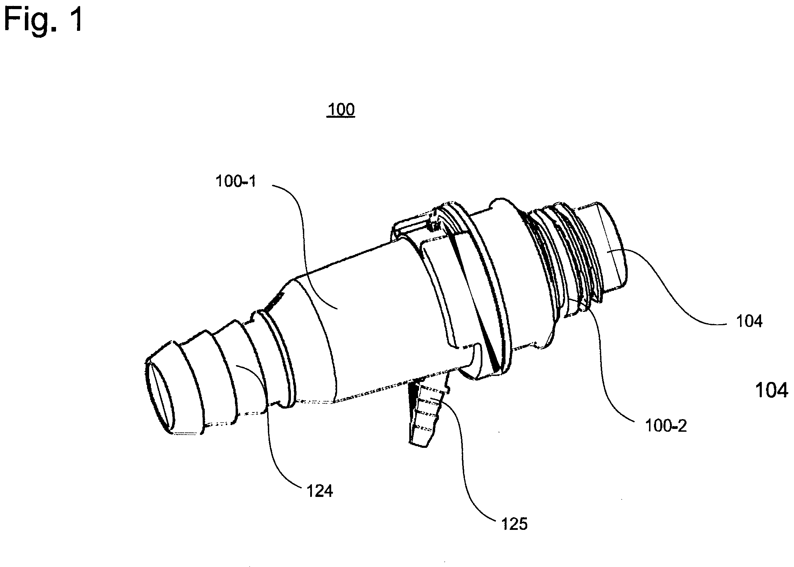

Fig. 1 zeigt eine perspektivische Ansicht eines Befüllkopfes 100, beispielsweise zur Betankung eines Flüssigkeitstanks mit einer wässrigen Harnstofflösung (SCR-Betankung). Eine wässrige Harnstofflösung wird in Kraftfahrzeugen zur Nachbehandlung von Abgasen in einem SCR-Katalysator benutzt. Dabei wird durch selektive katalytische Reduktion (Selective Catalytic Reduction - SCR) der Ausstoß von Stickoxiden um etwa 90 % reduziert.

Bei der SCR-Betankung wird die wässrige Harnstofflösung mit unterschiedlich ausgebildeten Zapfpistolen mit einer Füllgeschwindigkeit von bis zu 40 l/min in den Flüssigkeitstank gefüllt. Dabei sollte verhindert werden, dass die wässrige Harnstofflösung aus dem Befüllkopf 100 austritt und sogenannter Spit-Back entsteht. Daneben sollte auch bei mehrmaligem Nachtanken mit einer Zapfpistole als Befülldüse ein Flüssigkeitsaustritt vermieden werden. Zusätzlich sollte die SCR-Betankung mit einer auf den Befüllkopf aufgeschraubten Kruse-Flasche oder einem Adapter für einen Kanister möglich sein.

Der Befüllkopf 100 ist aus einem ersten Befüllkopfteil 100-1 und einem zweiten Befüllkopfteil 100-2 gebildet. Das erste Befüllkopfteil 100-1 und das zweite Befüllkopfteil 100-2 sind flüssigkeits- und druckdicht miteinander verbunden und bilden im Inneren einen Hohlraum, in dem ein Tauchrohrformkörper eingesetzt ist. Der Tauchrohrformkörper bildet im Inneren des Befüllkopfes 100 einen weiteren Teil eines Einfüllstutzens 104. Der Tauchrohrformkörper nimmt eine Zapfpistole als Befülldüse auf und positioniert diese in dem Befüllkopf 100. Zusätzlich begrenzt der Tauchrohrformkörper den Strahl der aus der Befülldüse austretenden Flüssigkeit.

Daneben umfasst der Befüllkopf 100 einen großen Anschlussstutzen 124 zum Anschließen oder Aufstecken eines Einfüllrohres oder Schlauches, der in einen Flüssigkeitstank führt und einen kleinen Anschlussstutzen 125 zum Anschließen einer Belüftungsleitung, die zum Luftaustausch oder Belüftung bei einer Flaschenbetankung dient, falls eine Flasche (Kruse-Flasche) druckdicht auf einem Gewinde des Befüllkopfes 100 verschraubt wird. Fig. 1 zeigt den Befüllkopf 100 von außen ohne Halteblech und ohne die an den Anschlussstutzen 124 und 125 aufgesteckten Schläuche. Der Befüllkopf 100 kann zur Befestigung an einer Karosserie zusätzlich mit einem Halteblech ausgerüstet sein.

Die Befüllkopfteile 100-1 und 100-2 können beispielsweise aus thermoplastischen Elastomeren (TPE) oder Elastomerlegierungen, insbesondere aus thermoplastischen Polyolefinen wie TPE-O (unvernetzte thermoplastische Polymere), oder Blockcopolymeren wie beispielsweise Polyestern (TPE-E), Polyamidelastomeren (TPE-A) gebildet sein. Besonders vorteilhaft ist die Herstellung aus Polyoxymethylen (POM) oder Polyamiden und deren Derivate, da sich hierdurch eine besondere Widerstandsfähigkeit des Befüllkopfes 100 realisieren lässt. Vorteilhaft ist es, die Einzelteile des Befüllkopfes 100 auf technisch einfache Weise im Spritzgussverfahren herzustellen. Alle Teile des Befüllkopfes 100 können ein Material umfassen, das eine Kristallbildung von Harnstoffkristallen an deren Oberfläche verhindert.

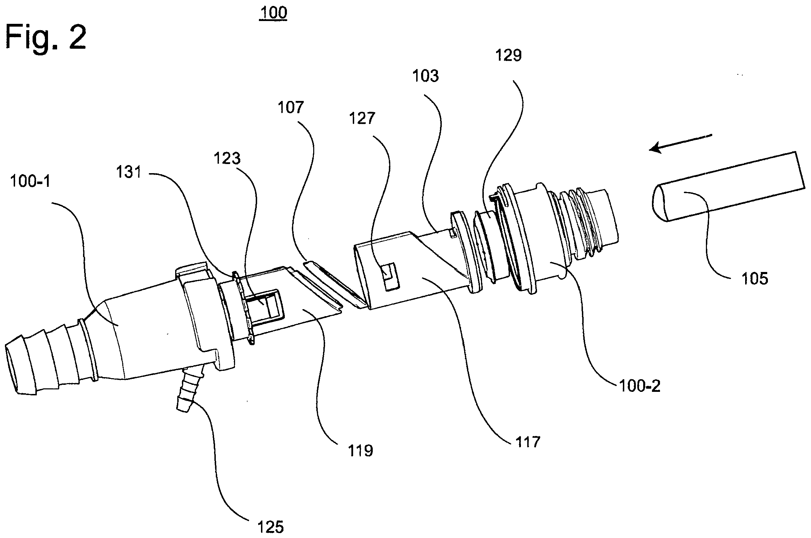

Fig. 2 zeigt eine Explosionsdarstellung des Befüllkopfes 100 und seiner Einzelteile. Der Befüllkopf 100 umfasst einen Tauchrohrformkörper 103 mit einem ersten Formteil 117 und einem zweiten Formteil 119. Zwischen dem ersten Formteil 117 und dem zweiten Formteil 119 ist ein Dichtungselement 107 angeordnet, das die Verbindungsstelle zwischen dem ersten Formteil 117 und dem zweiten Formteil 119 abdichtet. Das erste Formteil 117, das zweite Formteil 119 und das Dichtungselement 107 bilden den Tauchrohrformkörper 103.

Das erste Formteil 117 bildet einen Teil eines Einfüllstutzens 104 im Inneren des Befüllkopfes 100. Das zweite Formteil 119 bildet einen über die eingesetzte Befülldüse 105 hinausragenden Teil zum Formen und Zentrieren eines von der Befülldüse 105 beim Betanken ausgehenden Flüssigkeitsstrahles.

Durch das Formen des Flüssigkeitsstrahles mittels des zweiten Formteils 119 wird eine Betankung mit einer hohen Durchflussgeschwindigkeit sichergestellt und ein Ansammeln der Flüssigkeit im Inneren des Befüllkopfes 100 verhindert. Besonders vorteilhaft ist es, wenn das zweite Formteil 119 zylinder- oder rohrförmig mit parallelen Wänden ist, da hierdurch eine laminare Flüssigkeitsströmung erzeugt werden kann.

Das erste Formteil 117 dient daneben zum Fixieren eines Ringmagneten 129 im Inneren des Befüllkopfes 100. Der Ringmagnet 129 ist zwischen dem ersten Formteil 117 und dem zweiten Befüllkopfteil 100-2 in einem Hohlraum eingesetzt. Der Ringmagnet 129 erzeugt ein dauerhaftes magnetisches Feld, das von einer Befülldüse 105 erfasst werden kann, um die korrekte Position der Befülldüse 105 im Inneren des Befüllkopfes 100 zu bestimmen. Zusätzlich sichern Anschlagrippen die korrekte Position. Weiter umfasst das erste Formteil 117 zwei seitliche Rastöffnungen 127 zum Eingreifen eines Rasthakens 123.

Der Ringmagnet 129 als Magnetelement ist aus einem magnetischen Kunststoffmaterial gebildet. Das Magnetelement behält ein statisches Magnetfeld, ohne dass ein elektrischer Stromfluss benötigt wird. Zu diesem Zweck können einem Kunststoff magnetische oder magnetisierbare Füllstoffe zugegeben werden. Das Magnetelement kann beispielsweise mittels eines Spritzgussverfahrens hergestellt werden und während oder nach dem Spritzgießen in ein Magnetfeld eingebracht werden, um dieses zu magnetisieren.

Der Kunststoff ist beispielsweise ein Thermoplastcompound, das Polyamide, wie PA-6 oder PA-12 oder Polyphenylensulfid PPS als Trägerpolymer enthält, vorzugsweise PA-12, hoch vorzugsweise PPS mit Füllstoffen aus Hartferrit oder Seltenerd-Compounds. Als Hartferrit-Compounds werden vorzugsweise Sr- oder Ba-Ferrite eingesetzt. Als Seltenerd-Compounds können NdFeB, SmCo oder SmFeN eingesetzt werden. Die bevorzugten Thermoplastcompounds mit Hartferrit-Compounds besitzen beispielsweise eine Koerzitivfeldstärke (HcJ) von 200 bis 300 KA/m.

Das zweite Formteil 119 umfasst zwei Rasthaken 123 zum Eingreifen in die Rastöffnungen 127 des ersten Formteils 117. Beim Zusammenstecken des ersten Formteils 117 und des zweiten Formteils 119 rasten die Rasthaken 123 in der Rastöffnung 127 ein und es entsteht eine feste Verbindung, die auf einfache Weise hergestellt werden kann. Im Allgemeinen können jedoch auch andere Rastmittel vorgesehen sein, solange durch die eine mechanische Verbindung des ersten Formteils 117 und des zweiten Formteils 119 bewirkt wird.

An dem unteren Ende des zweiten Formteils 119 ist eine beispielsweise kreisförmige Schwallwand 131 angeordnet, die die Flüssigkeitsströmung in ein Flüssigkeitsreservoir zwischen dem Tauchrohrformkörper 103 und einer Gehäusewand des Befüllkopfes 100 hemmt. Die zurückströmende Flüssigkeit wird durch die Schwallwand 131 abgebremst und es wird verhindert, dass der Befüllkopf 100 vollständig beflutet wird. Nichtsdestotrotz sollte beim Nachtanken das Flüssigkeitsreservoir mit einer ausreichenden Flüssigkeitsrestmenge befüllt werden können.

Das Dichtungselement 107 ragt in die Innenseite des Tauchrohrformkörpers 103 hinein und dichtet die Befülldüse 105 gegenüber dem Tauchrohrformkörper 103 ab, indem sich das Dichtungselement 107 seitlich umlaufend um die Befülldüse 105 legt. Dadurch wird verhindert, dass Flüssigkeit zwischen der Befülldüse 105 und dem Tauchrohrformkörper 103 zurückspritzen kann. Das Dichtungselement 107 läuft in der Längsachse des Befüllkopfes 100 diagonal um die Befülldüse 105 um. Durch diese Anordnung lässt sich der technische Vorteil erreichen, dass die Dichtwirkung des Befüllkopfes 100 erhöht wird, die Befülldüse 105 möglichst weit im Inneren des Befüllkopfes 100 abgedichtet wird und eine Öffnung für eine Zapfventilautomatik am unteren Ende der Befülldüse 105 unverdeckt bleibt. Die Zapfventilautomatik sorgt dafür, dass der Tankvorgang bei vollem Flüssigkeitstank automatisch beendet wird.

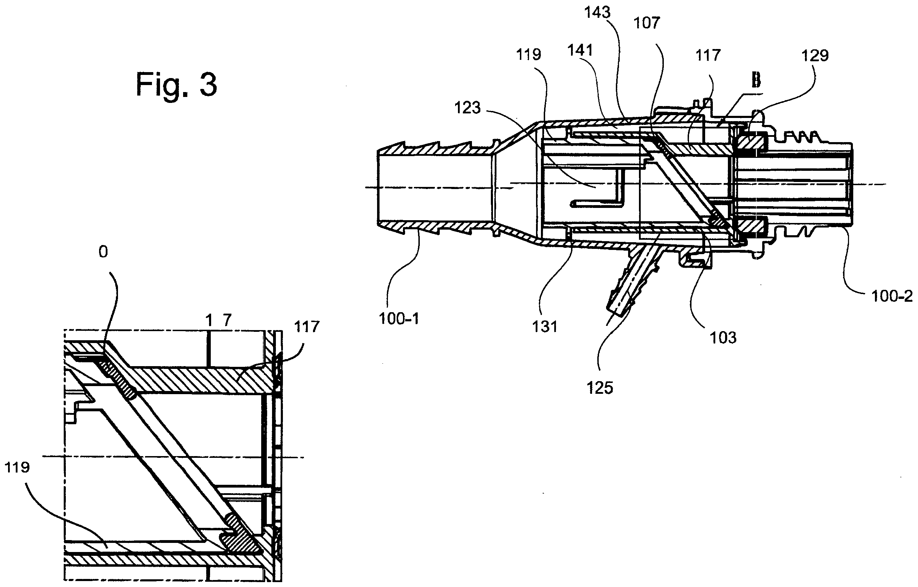

Fig. 3 zeigt eine Querschnittsansicht des Befüllkopfes 100. Der Befüllkopf 100 umfasst zwischen der Gehäusewand 143 und dem Tauchrohrformkörper 103 das Flüssigkeitsreservoir 141. Das Flüssigkeitsreservoir 141 bildet einen zylinderförmigen Hohlraum, in dem eine aus dem Tank zurückschwappende Flüssigkeitsmenge oder eine beim Nachtanken aus der Befülldüse 105 ausströmende Flüssigkeitsmenge aufgenommen werden kann. Dadurch wird ein Austreten der Flüssigkeit aus dem Befüllkopf 100 vermieden.

Die Schwallwand 131 ist am unteren Ende des Tauchrohrformkörpers 103 am Eingang des Flüssigkeitsreservoirs 141 angeordnet. Flüssigkeit, die in oder aus dem Flüssigkeitsreservoir 141 fließt, passiert die Schwallwand 131. Dadurch kann ein Fluss in das Flüssigkeitsreservoir 141 gehemmt werden, so dass ein Austritt von Flüssigkeit aus dem Befüllkopf 100 verhindert wird. In der Schwallwand 131 sind zu diesem Zweck Durchtrittsöffnungen 145 gebildet, die den Fluss in das Flüssigkeitsreservoir 141 bestimmen. Die Größe, Anzahl und Lage der Durchtrittsöffnungen 145 ist auf die Größe dieses Flusses abgestimmt.

Vorteilhaft ist es, wenn das Flüssigkeitsreservoir 141 mindestens ein Volumen von 160 ml bis 200 ml aufweist, da in diesem Fall auch bei einem dreimaligen Nachtanken mit einer Zapfventilautomatik ein Austreten von Flüssigkeit aus dem Befüllkopf 100 vermieden werden kann.

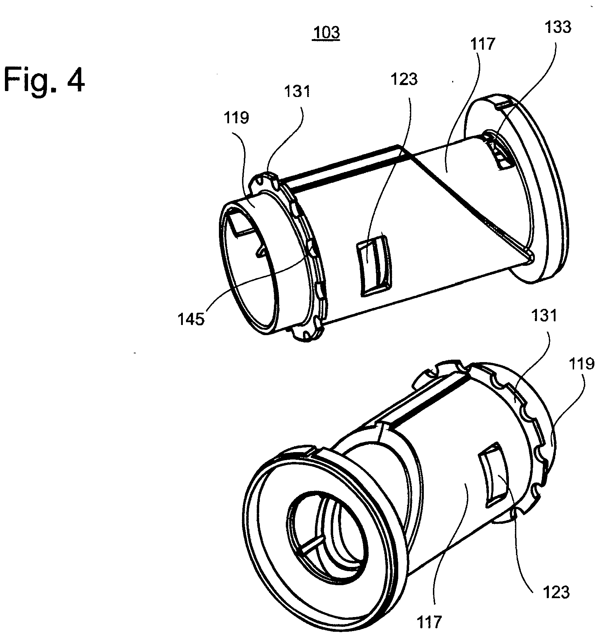

Fig. 4 zeigt eine perspektivische Ansicht eines Tauchrohrformkörpers 103. Am oberen Ende des ersten Formteils 117 befindet sich eine Öffnung 133 aus der Luft aus dem Flüssigkeitsreservoir 141 austreten kann, so dass die Bildung eines Luftpolsters im Flüssigkeitsreservoir 141 verhindert wird. Ein Druckpolster könnte verhindern, dass das Flüssigkeitsreservoir 141 beflutet werden kann, beispielsweise bei einem Nachtankvorgang, so dass Flüssigkeit aus dem Befüllkopf 100 austreten könnte. Die Größe und die Lage der Öffnung 133 sind auf die Funktion des Befüllkopfes 100 und das Flüssigkeitsreservoir 141 abgestimmt.

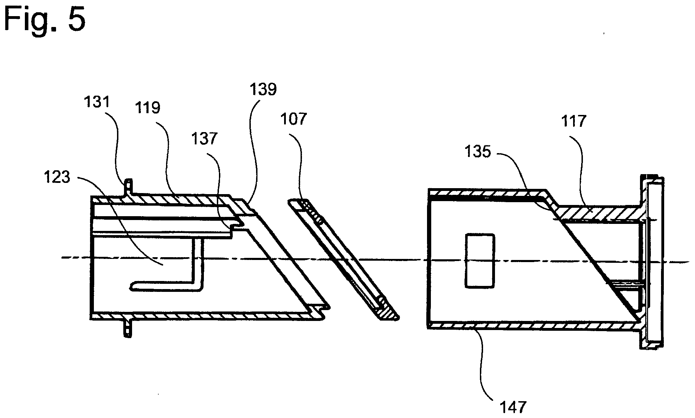

Fig. 5 zeigt eine Querschnittsansicht des Tauchrohrformkörpers 103 mit getrennten Formkörperteilen 117 und 119. Das erste Formteil 117 weist eine diagonal um die Längsachse des Befüllkopfes 100 umlaufende Auflagefläche 135 für das Dichtungselement 107 auf. An der Auflagefläche 135 liegt das Dichtungselement 107 an. In entsprechender Weise umfasst das zweite Formteil 119 eine weitere Auflagefläche 139, an der eine entgegengesetzte Seite der Dichtungselements 107 anliegt.

In einer weiteren Ausführungsform weist das erste Formteil 117 eine senkrecht um die Längsachse des Befüllkopfes 100 umlaufende Auflagefläche 135 für das Dichtungselement 107 auf, wobei das Dichtungselement 107 senkrecht um die Längsachse des Einfüllstutzens 104 herumläuft. In entsprechender Weise umfasst das zweite Formteil 119 eine senkrecht um die Längsachse des Befüllkopfes 100 umlaufende weitere Auflagefläche 139, an der eine entgegengesetzte Seite des Dichtungselements 107 anliegt.

Das Dichtungselement 107 wird beim Zusammensetzen des Tauchrohrformkörpers 103 zwischen den Auflageflächen 135 und 139 eingeklemmt und von diesen gehalten. Dadurch wird der Vorteil erreicht, dass sich die Dichtwirkung des Dichtungselementes 107 innerhalb des Tauchrohrformkörpers 103 verbessert.
Daneben umfasst der Tauchrohrformkörper 103 einen Anschlagsabschnitt 137 zum Bilden eines Anschlags für die Befülldüse 105. Der Anschlagsabschnitt 137 ist auf der Innenseite des zweiten Formteils 119 gebildet, so dass die Befülldüse 105 beim Einführen in den Einfüllstutzen 104 mit ihrem vorderen Ende an den Anschlagsabschnitt 137 stößt. Der Anschlagsabschnitt 137 ist beispielsweise durch einen im Inneren des zweiten Formteils 119 hervorstehenden Wandabschnitt gebildet, der sich entlang der Befüllrichtung erstreckt. Auf diese Weise kann eine Verwirbelung der Flüssigkeit auch bei hohen Füllgeschwindigkeiten verhindert werden. Das erste Formteil 117 umfasst eine umlaufende Wandung 147, die einen zylindrischen Aufnahmeraum zur Aufnahme des zweiten Formteils 119 umfasst.

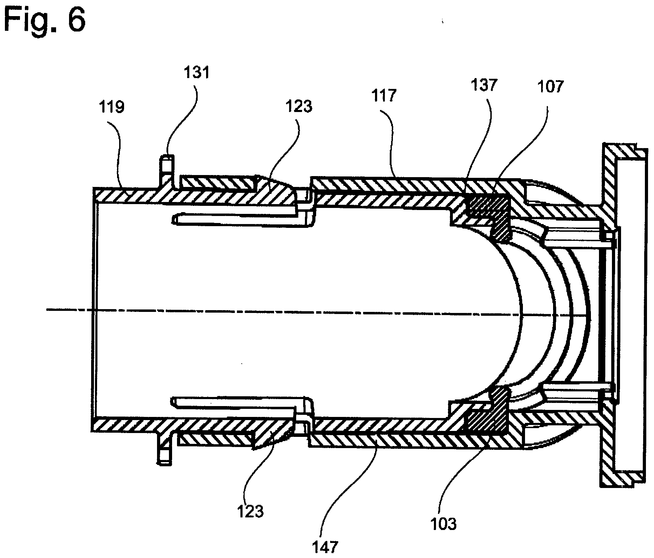

Fig. 6 zeigt eine Querschnittsansicht des Tauchrohrformkörpers 103 mit zusammengesetzten Formkörperteilen 117 und 119 und dem Dichtungselement 107. Das erste Formteil 117 ist derart ausgestaltet, dass eine Wandung 147 das zweite Formteil 119 seitlich umgreift. Das zweite Formteil 119 ist in dem ersten Formteil 117 aufgenommen. Dadurch erhöht sich die Dichtwirkung zwischen den beiden Formteilen 117 und 119 zusätzlich. Die Rasthaken 123 sind in den Rastöffnungen 127 eingehakt.

Das zweite Formteil 119 weist in der Auflagefläche eine umlaufende Aussparung 137 zum formschlüssigen Einsetzen eines vorspringenden Abschnittes des Dichtungselementes 107 in dem Tauchrohrformkörper 103 auf. Dadurch wird nicht nur die Dichtwirkung des Dichtungselementes 107 erhöht, sondern es kann auch eine korrekte Lage des Dichtungselementes 107 beim Zusammensetzen des Tauchrohrformkörpers 103 sichergestellt werden. Daneben wird eine Halterung des Dichtungselementes 107 zwischen dem ersten Formteil 117 und dem zweiten Formteil 119 verbessert.

In einer weiteren Ausführungsform läuft das Dichtungselement 107 senkrecht um die Längsachse des Einfüllstutzens 104 herum, wobei das zweite Formteil 119 in der Auflagefläche eine umlaufende Aussparung 137 zum formschlüssigen Einsetzen eines vorspringenden Abschnittes des senkrecht angeordneten Dichtungselementes 107 in dem Tauchrohrformkörper 103 aufweist.

Zusätzlich kann in dem zweiten Formteil 119 eine Positionierungsfeder vorgesehen sein, die in eine Positionierungsnut in dem Dichtungselement 107 eingreift, anhand der der korrekte Sitz des Dichtungselementes 107 beim Zusammensetzen des Formkörpers sichergestellt wird.

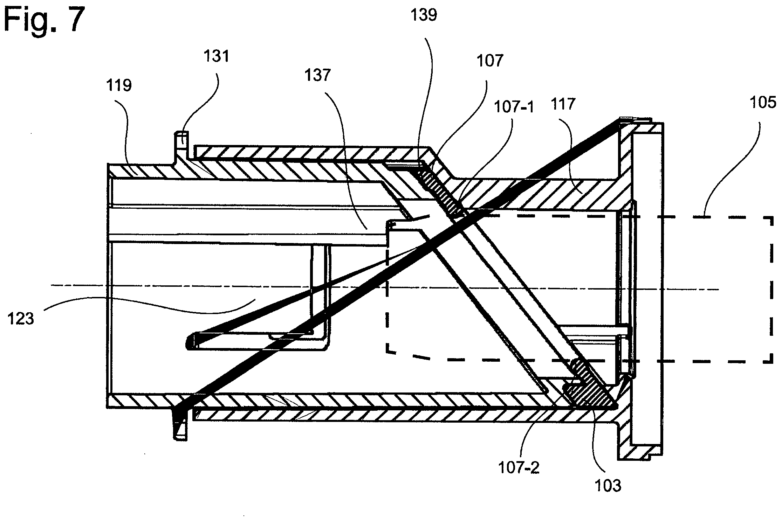

Fig. 7 zeigt eine weitere Querschnittsansicht des Tauchrohrformkörpers 103 mit zusammengesetzten Formkörperteilen 117 und 119, in der eine gestrichelte Linie die Position der eingesetzten Befülldüse 105 angibt. Die Stellen 107-1 und 107-2 sind die Stellen in der Querschnittsebene, an denen die Befülldüse 105 an dem Dichtungselement 107 anliegt.

In einer weiteren Ausführungsform umfasst das zweite Formteil 119 eine weitere senkrecht um die Längsachse des Befüllkopfes 100 umlaufende Auflagefläche 139, an der das Dichtungselement 107 anliegt, wobei das Dichtungselement 107 senkrecht um eine Längsachse des Einfüllstutzens 104 herumläuft. Die Stellen 107-1 und 107-2 sind die Stellen in der Querschnittsebene, an denen die Befülldüse 105 an dem Dichtungselement 107 anliegt, wobei die Stellen 107-1 und 107-2 senkrecht um die Längsachse des Einfüllstutzens 104 angeordnet sind.

Durch die um die Befülldüse 105 diagonal, bzw. senkrecht umlaufende Dichtlinie wird ein Zurückspritzen der Flüssigkeit verhindert.

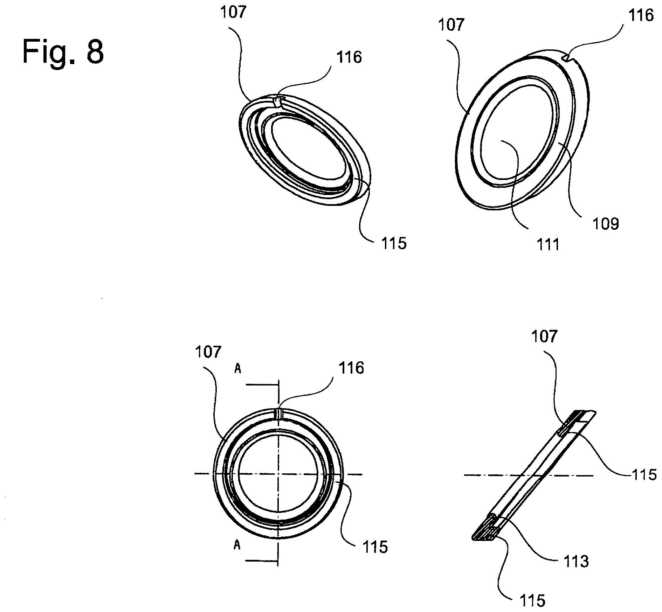

Fig. 8 zeigt mehrere Ansichten eines Dichtungselementes 107. Das Dichtungselement 107 befindet sich in dem Einfüllstutzen 104, der durch den Tauchrohrformkörper 103 und das erste Befüllkopfteil 100-1 gebildet wird. In der Längsrichtung des Einfüllstutzens 104 läuft das Dichtungselement 107 diagonal herum, um den Einfüllstutzen 104 gegenüber der Befülldüse 105 abzudichten. Das Dichtungselement 107 kann ein Material umfassen, das eine Kristallbildung von Harnstoffkristallen an deren Oberfläche verhindert.

Das Dichtungselement 107 wird durch eine elastische Ringscheibe 109 mit einer ovalen Einführöffnung 111 zum Einführen der Befülldüse 105 gebildet. Die ovale Einführöffnung 111 legt sich bei einer diagonalen Anordnung des Dichtungselementes 107 an die im Querschnitt kreisförmige Außenseite der Befülldüse 105.

In einer weiteren Ausführungsform befindet sich das Dichtungselement 107 in dem Einfüllstutzen 104, der durch den Tauchrohrformkörper 103 und das erste Befüllkopfteil 100-1 gebildet wird, wobei das Dichtungselement 107 senkrecht um die Längsachse des Einfüllstutzens 104 herum läuft, um den Einfüllstutzen 104 gegenüber der Befülldüse 105 abzudichten. Das Dichtungselement 107 wird durch eine elastische Ringscheibe 109 mit einer runden Einführöffnung 111 zum Einführen der Befülldüse 105 gebildet. Die runde Einführöffnung 111 legt sich bei einer senkrechten Anordnung des Dichtungselementes 107 an die im Querschnitt kreisförmige Außenseite der Befülldüse 105.

Die diagonale, bzw. senkrechte Lage des Dichtungselementes 107 stellt sicher, dass die unterschiedlich angeordneten Öffnungen in Zapfpistolen für die Zapfventilautomatik nicht verdeckt werden und eine Abschaltung der jeweiligen Zapfpistole möglich bleibt. Bei einer senkrechten Lage des Dichtungselementes 107 wird zudem sichergestellt, dass die Dichtung so positioniert werden kann, dass bei allen Zapfpistolen die Abschaltautomatik frei ist und somit das Zapfventil um 360° frei rotierend betankt werden kann.

Die Ringscheibe 109 umfasst einen Verstärkungsabschnitt 113 zum Verstärken des Dichtungselementes 107 im Bereich der Einführöffnung 111. Der Verstärkungsabschnitt 113 kann beispielsweise durch einen Bereich mit einer größeren Dicke als die übrige Dicke der Ringscheibe 109 gebildet sein, beispielsweise durch eine umlaufende ringförmige Wulst 115. Der innere Dichtungsrand des Dichtungselementes 107 wird dadurch nicht nur verstärkt, sondern zusätzlich auch abgerundet, so dass ein Einsetzen der Befülldüse 105 erleichtert wird.

Zum Aufnehmen des Dichtungselementes 107 weist der Tauchrohrformkörper 103 eine Aussparung zum Einsetzen des Dichtungselementes 107 auf. Insbesondere ist die Aussparung zum Einsetzen des Dichtungselementes 107 zwischen einem ersten Formteil 117 und einem zweiten Formteil 119 zwischen zwei Auflageflächen 135 und 139 gebildet. Sowohl das erste Formteil 117 als auch das zweite Formteil 119 können die Aussparung zum Einsetzen des Dichtungselementes 107 umfassen.

Das Dichtungselement 107 weist einen umlaufenden vorstehenden Rand 115 auf, der in eine entsprechende ringförmige Aussparung in dem Einfüllstutzen 104 eingesetzt wird und das Dichtungselement 107 in dem Einfüllstutzen 104 zusätzlich fixiert. Daneben umfasst das Dichtungselement 107 eine Positionierungsnut 116 zum Eingreifen in eine entsprechende Positionierungsfeder, anhand der der korrekte Sitz des Dichtungselementes 107 sichergestellt werden kann. Das Dichtungselement 107 kann aus allen geeigneten Dichtmaterialien gebildet sein, beispielsweise aus Polyurethan, Silikon, silanmodifizierten Polymeren, thermoplastischen Elastomere (TPE) oder Gummi.

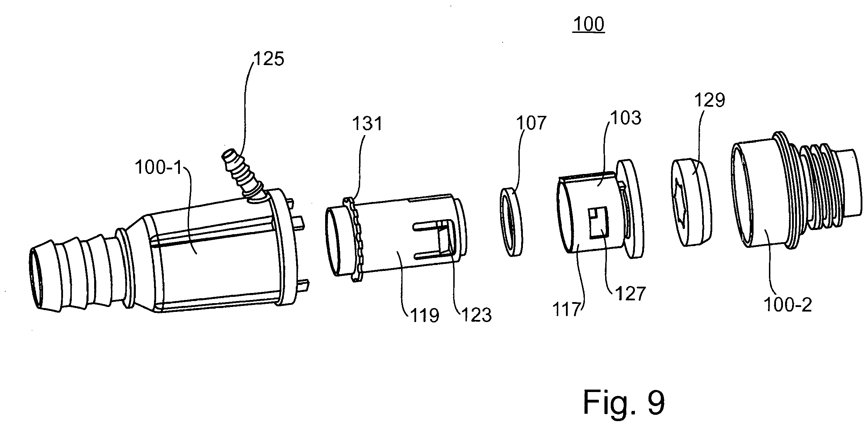

Fig. 9 zeigt eine Explosionsdarstellung einer weiteren Ausführungsform des Befüllkopfes 100 und seiner Einzelteile. Der Befüllkopf 100 umfasst einen Tauchrohrformkörper 103 mit einem ersten Formteil 117 und einem zweiten Formteil 119. Zwischen dem ersten Formteil 117 und dem zweiten Formteil 119 ist ein Dichtungselement 107 angeordnet, das die Verbindungsstelle zwischen dem ersten Formteil 117 und dem zweiten Formteil 119 abdichtet. Das erste Formteil 117, das zweite Formteil 119 und das Dichtungselement 107 bilden den Tauchrohrformkörper 103.

Das erste Formteil 117 dient daneben zum Fixieren eines Ringmagneten 129 im Inneren des Befüllkopfes 100. Der Ringmagnet 129 ist zwischen dem ersten Formteil 117 und dem zweiten Befüllkopfteil 100-2 in einem Hohlraum eingesetzt. Weiter umfasst das erste Formteil 117 zwei seitliche Rastöffnungen 127 zum Eingreifen eines Rasthakens 123.

Das zweite Formteil 119 umfasst zwei Rasthaken 123 zum Eingreifen in die Rastöffnungen 127 des ersten Formteils 117. Beim Zusammenstecken des ersten Formteils 117 und des zweiten Formteils 119 rasten die Rasthaken 123 in der Rastöffnung 127 ein und es entsteht eine feste Verbindung, die auf einfache Weise hergestellt werden kann. Im Allgemeinen können jedoch auch andere Rastmittel vorgesehen sein, solange durch diese eine mechanische Verbindung des ersten Formteils 117 und des zweiten Formteils 119 bewirkt wird.

An dem unteren Ende des zweiten Formteils 119 ist eine beispielsweise kreisförmige Schwallwand 131 angeordnet, die die Flüssigkeitsströmung in ein Flüssigkeitsreservoir zwischen dem Tauchrohrformkörper 103 und einer Gehäusewand des Befüllkopfes 100 hemmt.

Das Dichtungselement 107 ragt in die Innenseite des Tauchrohrformkörpers 103 hinein und dichtet die Befülldüse 105 gegenüber dem Tauchrohrformkörper 103 ab, indem sich das Dichtungselement 107 seitlich umlaufend um die Befülldüse 105 legt. Dadurch wird verhindert, dass Flüssigkeit zwischen der Befülldüse 105 und dem Tauchrohrformkörper 103 zurückspritzen kann. Das Dichtungselement 107 läuft in der Längsachse des Befüllkopfes 100 senkrecht um die Befülldüse 105 herum. Durch diese Anordnung lässt sich der technische Vorteil erreichen, dass durch die senkrechte Anordnung der Dichtung der gesamte Befüllkopf 100 kleiner konstruiert werden kann. Darüber hinaus kann durch die senkrechte Konstruktion die Dichtung so positioniert werden, dass bei allen Zapfpistolen die Abschaltautomatik frei ist und somit das Zapfventil um 360° frei rotierend betankt werden kann.

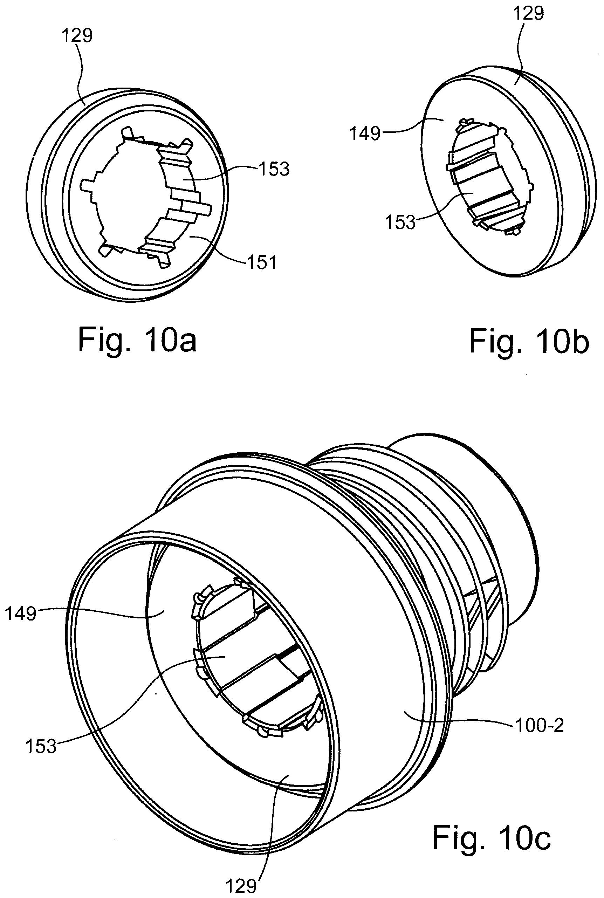

Fig. 10 zeigt einen Magnet aus magnetisierbarem Kunststoffcompound. Der Ringmagnet 129 gemäß Fig. 10 (a) und Fig. 10 (b) weist eine ebene Unterseite 149, eine abgerundete Oberseite 151, sowie eine Aussparung 153 auf, wobei die Aussparung 153 beliebige geometrische Formen aufweisen kann. In einer alternativen Ausführungsform kann die Aussparung 153 nicht im Innenbereich des Ringmagneten 129 angeordnet sein, sondern stattdessen an der Außenseite des Ringmagneten 129. Der Ringmagnet 129 als Magnetelement ist aus einem magnetischen Kunststoffmaterial gebildet. Das Magnetelement behält ein statisches Magnetfeld, ohne dass ein elektrischer Stromfluss benötigt wird. Zu diesem Zweck können einem Kunststoff magnetische oder magnetisierbare Füllstoffe zugegeben werden. Das Magnetelement kann beispielsweise mittels eines Spritzgussverfahrens hergestellt werden und während oder nach dem Spritzgießen in ein Magnetfeld eingebracht werden, um dieses zu magnetisieren.

Gemäß Fig. 10 (c) ist der Ringmagnet 129 in einem Hohlraum in dem zweiten Befüllkopfteil 100-2 eingesetzt. Der Ringmagnet 129 erzeugt ein dauerhaftes magnetisches Feld, das von einer Befülldüse 105 erfasst werden kann, um die korrekte Position der Befülldüse 105 im Inneren des Befüllkopfes 100 zu bestimmen. Damit der Ringmagnet 129 ein wirksames magnetisches Feld erzeugen kann, muss der Ringmagnet 129 richtungsselektiv in den Hohlraum in dem zweiten Befüllkopfteil 100-2 eingesetzt werden. Somit kann die Ausgestaltung der Aussparung 153 beim Einsetzen des Ringmagneten 129 in das zweite Befüllkopfteil 100-2 eine notwendige Orientierung des Richtungsmagneten 129 in dem zweiten Befüllkopfteil 100-2 sicherstellen. Somit wird die notwendige Orientierung des durch den Ringmagneten 129 erzeugten magnetischen Feldes sichergestellt.

Durch den erfindungsgemäßen Befüllkopf 100 können unterschiedliche Zapfpistolen sowie GL-Adapter für Kanister und Kruse-Flaschen aufgenommen werden. Eine Schaltung einer Zapfventilautomatik, beispielsweise einer ZVA-Pistole, erfolgt über den Ringmagnet 129 des Befüllkopfes 100. Daneben erfolgt eine Belüftung bei einer Betankung mit einer Kruse-Flasche und einem Kanister über einen Anschlussstutzen 124 für eine Belüftungsleitung.

Weiter ist durch das Flüssigkeitsreservoir 141 der Befüllkopf 100 derart ausgebildet, dass Rückschwappmenge (Spit-Back-Menge) aufgenommen werden kann. Der Befüllkopf 100 ermöglicht einen Druckabbau und vereinheitlicht den Flüssigkeitsstrahl unterschiedlicher Zapfpistolen beim Befüllen. Ein Zurückschwappen von Flüssigkeit (Spit-Back) wird wirksam verhindert. Bei Verwendung des Befüllkopfes 100 zum Befüllen mit einer wässrigen Harnstofflösung kann eine Kristallbildung im Inneren des Befüllkopfes 100 durch einen dichten Verschlussdeckel verhindert werden, der aufgeschraubt wird und in den Fig. nicht gezeigt wird.

Insbesondere ermöglicht der Befüllkopf 100 Füllgeschwindigkeiten von 40 l/min mit einem kleinen kompakten Befüllkopf 100, ohne dass ein Zurückschwappen von Flüssigkeit auftritt. Durch die Anordnung, Lage und Form des Dichtungselementes 107 ist ein dreimaliges Nachtanken ohne Austritt von Flüssigkeit möglich.

Der Tankvorgang mit dem Befüllkopf 100 wird durch ein manuelles Betätigen der Zapfpistole eingeleitet. Über den Befüllkopf 100 gelangt die Flüssigkeit nach dem Öffnen eines Klappenventils in den Flüssigkeitstank und der Flüssigkeitstank wird mit einer wässrigen Harnstofflösung gefüllt. In dem Flüssigkeitstank verdrängt die Flüssigkeit Luft, die über ein Entlüftungsventil einweicht. Anschließend steigt der Flüssigkeitspegel steigt bis an den Tauchrohrformkörper 103 und der Tankinnendruck und der Flüssigkeitsstand steigen. Ein Schwimmerventil schließt und die Flüssigkeit gelangt bis an die Befülldüse 105 der Zapfpistole, deren Zapfventilautomatik daraufhin abschaltet. Ein Klappenventil schließt und der Tankvorgang ist beendet.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Befüllkopf
- 100-1: Befüllkopfteil
- 100-2: Befüllkopfteil
- 103: Tauchrohrformkörper
- 104: Einfüllstutzen
- 105: Befülldüse
- 107: Dichtungselement
- 109: Ringscheibe
- 111: Einführöffnung
- 113: Verstärkungsabschnitt
- 115: Wulst
- 116: Positionierungsnut
- 117: erstes Formteil
- 119: zweites Formteil
- 123: Rasthaken
- 127: Rastöffnung
- 129: Ringmagnet/Magnetelement
- 131: Schwallwand
- 133: Öffnung
- 135: Auflagefläche
- 137: Anschlagsabschnitt
- 139: Auflagefläche
- 141: Flüssigkeitsreservoir
- 143: Gehäusewand
- 145: Durchtrittsöffnung
- 147: Wandung
- 149: Unterseite des Ringmagnets
- 151: Oberseite des Ringmagnets
- 153: Aussparung des Ringmagnets

## Patentansprüche

1. Befüllkopf (100) mit einem Einfüllstutzen (104) für ein Zapfventil (105), mit:
einem Magnetelement (129) zum Freigeben einer Zapfventilautomatik des Zapfventils (105), wobei das Magnetelement (129) aus einem magnetischen Kunststoffmaterial gebildet ist, **dadurch gekennzeichnet, dass**
der Befüllkopf (100) einen zusammengesetzten Tauchrohrformkörper (103) im Inneren des Befüllkopfes (100) umfasst, der ein erstes Formkörperteil (117) zum Bilden eines Einfüllstutzens für eine Befülldüse und ein zweites Formkörperteil (119) zum Formen eines Flüssigkeitsstrahls der Befülldüse umfasst, das an dem ersten Formkörperteil (117) befestigt ist, und
wobei zwischen dem ersten Formkörperteil (117) und dem zweiten Formkörperteil (119) ein Dichtungselement (107) zum Abdichten des Einfüllstutzens eingesetzt ist.

2. Befüllkopf (100) nach Anspruch 1, wobei das erste Formkörperteil (117) und das zweite Formkörperteil (119) mit einer Gehäusewand (143) des Befüllkopfes (100) ein Flüssigkeitsreservoir (141) zum Aufnehmen einer Flüssigkeitsmenge bilden.

3. Befüllkopf (100) nach Anspruch 2, wobei das zweite Formkörperteil (119) eine kreisförmig umlaufende Schwallwand (131) zum Vermindern einer Flüssigkeitsströmung in das Flüssigkeitsreservoir (141) umfasst.

4. Befüllkopf (100) nach Anspruch 3, wobei die umlaufende Schwallwand (131) eine Durchtrittsöffnung (145) für die Flüssigkeitsströmung in das Flüssigkeitsreservoir (141) umfasst.

5. Befüllkopf (100) nach einem der Ansprüche 2 bis 4, wobei das erste Formkörperteil (117) eine Öffnung (133) zum Auslassen von Luft aus dem Flüssigkeitsreservoir (141) umfasst.

6. Befüllkopf (100) nach Anspruch 5, wobei die Öffnung (133) in der Nähe einer Verbindung des ersten Formkörperteils (117) mit dem Befüllkopf (100) gebildet ist.

7. Befüllkopf (100) nach einem der Ansprüche 1 bis 6, wobei der Tauchrohrformkörper (103) eine zylindrische Grundform aufweist.

8. Befüllkopf (100) nach einem der Ansprüche 1 bis 7, wobei das Dichtungselement (107) diagonal oder senkrecht um eine Längsachse des Einfüllstutzens (104) umläuft.

9. Befüllkopf (100) nach einem der Ansprüche 1 bis 8, wobei das erste Formkörperteil (117) oder das zweite Formkörperteil (119) eine Auflagefläche (135, 139) für das Dichtungselement (107) umfasst.

10. Befüllkopf (100) nach einem der Ansprüche 1 bis 9, wobei das erste Formkörperteil (117) ein Rastmittel (127) zum Einrasten in dem zweiten Formkörperteil (119) oder das zweite Formkörperteil (119) ein Rastmittel (123) zum Einrasten in dem ersten Formkörperteil (117) umfasst.

11. Befüllkopf (100) nach einem der Ansprüche 1 bis 10, wobei das zweite Formkörperteil (119) einen Anschlagsabschnitt (137) zum Bilden eines Anschlags für die Befülldüse (105) umfasst.

12. Befüllkopf (100) nach einem der Ansprüche 1 bis 11, wobei der Tauchrohrformkörper (103) mit dem Befüllkopf (100) verschweißt oder verklebt ist.

13. Befüllkopf (100) nach einem der Ansprüche 1 bis 12, wobei das erste Formkörperteil (117) eine umlaufende Wandung (147) zum seitlichen Umschließen des zweiten Formkörperteils (119) umfasst.

## Claims

1. Filling head (100) having a filler stub (104) for a pump nozzle (105), having:
a magnet element (129) for releasing an automatic pump nozzle mechanism of the pump nozzle (105), wherein the magnet element (129) is formed from a magnetic plastics material, **characterized in that**
the filling head (100) comprises an assembled molded dip tube body (103) in the interior of the filling head (100), which comprises a first molded body component (117) for forming a filler stub for a filling nozzle, and a second molded body component (119) for shaping a liquid jet of the filling nozzle, which is fastened on the first molded body component (117), and wherein a seal element (107) is inserted between the first molded body component (117) and the second molded body component (119) for sealing off the filler stub.

2. Filling head (100) according to Claim 1, wherein said first molded body component (117) and the second molded body component (119) together with a housing wall (143) of the filling head (100) form a liquid reservoir (141) for holding a liquid quantity.

3. Filling head (100) according to Claim 2, wherein the second molded body component (119) comprises an encircling circular anti-surge wall (131) for reducing liquid flow into the liquid reservoir (141).

4. Filling head (100) according to Claim 3, wherein the encircling anti-surge wall (131) comprises a passage opening (145) for the liquid flow into the liquid reservoir (141).

5. Filling head (100) according to any one of Claims 2 to 4, wherein the first molded body component (117) comprises an opening (133) for discharging air out off the liquid reservoir (141).

6. Filling head (100) according to Claim 5, wherein the opening (133) is formed in the vicinity of a connection of the first molded body component (117) to the filling head (100).

7. Filling head (100) according to any one of Claims 1 to 6, wherein the molded dip tube body (103) has a cylindrical basic shape.

8. Filling head (100) according to any one of Claims 1 to 7, wherein the seal element (107) runs diagonally or perpendicular around a longitudinal axis of the filler stub (104).

9. Filling head (100) according to any one of Claims 1 to 8, wherein the first molded body component (117) or the second molded body component (119) comprises a supporting surface (135, 139) for the seal element (107).

10. Filling head (100) according to any one of Claims 1 to 9, wherein the first molded body component (117) comprises a latching means (127) for latching in the second molded body component (119), or the second molded body component (119) comprises a latching means (123) for latching in the first molded body component (117).

11. Filling head (100) according to any one of Claims 1 to 10, wherein the second molded body component (119) comprises a stop portion (137) for forming a stop for the filling nozzle (105).

12. Filling head (100) according to any one of Claims 1 to 11, wherein the molded dip tube body (103) is welded or adhesively bonded to the filling head (100).

13. Filling head (100) according to one of Claims 1 to 12, wherein the first molded body component (117) comprises an encircling wall (147) for laterally enclosing the second molded body component (119).

## Revendications

1. Tête de remplissage (100) ayant une tubulure de remplissage (104) pour une buse de remplissage (105), comportant:
un élément magnétique (129) pour déclencher un fonctionnement automatique de la buse de remplissage (105), l'élément magnétique (129) est constitué d'un matériau plastique magnétique,
**caractérisée en ce que** la tête de remplissage (100) comportant un corps moulé assemblé ayant la forme d'un tube plongeur (103) à l'intérieur de la tête de remplissage (100), qui comprend une première partie du corps moulé (117) pour former une tubulure de remplissage pour une buse de remplissage et une deuxième partie du corps moulé (119) pour former un jet de fluide de la buse de remplissage, qui est fixée à la première partie du corps moulé (117), et
dans laquelle un élément d'étanchéité (107) étant inséré entre la première partie du corps moulé (117) et la deuxième partie du corps moulé (119) pour étancher la tubulure de remplissage.

2. Tête de remplissage (100) selon la revendication 1, dans laquelle la première partie du corps moulé (117) et la deuxième partie du corps moulé (119) constituant avec une paroi du boîtier (143) de la tête de remplissage (100) un réservoir de fluide (141) pour contenir une quantité de fluide.

3. Tête de remplissage (100) selon la revendication 2, dans laquelle la deuxième partie du corps moulé (119) comportant un brise-flot (131) circulaire périphérique pour diminuer un écoulement du fluide dans le réservoir de fluide (141).

4. Tête de remplissage (100) selon la revendication 3, dans laquelle le brise-flot (131) périphérique comportant une ouverture de passage (145) pour l'écoulement du fluide dans le réservoir de fluide (141).

5. Tête de remplissage (100) selon l'une quelconque des revendications 2 à 4, dans laquelle la première partie du corps moulé (117) comportant une ouverture (133) pour décharger l'air du réservoir de fluide (141).

6. Tête de remplissage (100) selon la revendication 5, dans laquelle l'ouverture (133) étant construite près d'un raccord de la première partie du corps moulé (117) avec la tête de remplissage (100).

7. Tête de remplissage (100) selon l'une quelconque des revendications 1 à 6, dans laquelle le corps moulé ayant la forme d'un tube plongeur (103) présentant une forme de base cylindrique.

8. Tête de remplissage (100) selon l'une quelconque des revendications 1 à 7, dans laquelle l'élément d'étanchéité (107) étant placé diagonalement ou perpendiculairement autour d'un axe longitudinal de la tubulure de remplissage (104).

9. Tête de remplissage (100) selon l'une quelconque des revendications 1 à 8, dans laquelle la première partie du corps moulé (117) ou la deuxième partie du corps moulé (119) comportant une surface d'appui (135, 139) pour l'élément d'étanchéité (107).

10. Tête de remplissage (100) selon l'une quelconque des revendications 1 à 9, dans laquelle la première partie du corps moulé (117) comportant un moyen d'encliquetage (127) pour l'encliquetage dans la deuxième partie du corps moulé (119) ou la deuxième partie du corps moulé (119) comportant un moyen d'encliquetage (123) pour l'encliquetage dans la première partie du corps moulé (117).

11. Tête de remplissage (100) selon l'une quelconque des revendications 1 à 10, dans laquelle la deuxième partie du corps moulé (119) comportant une section de butée (137) pour former une butée pour la buse de remplissage (105).

12. Tête de remplissage (100) selon l'une quelconque des revendications 1 à 11, dans laquelle le corps moulé ayant la forme d'un tube plongeur (103) étant soudé ou collé à la tête de remplissage (100).

13. Tête de remplissage (100) selon l'une quelconque des revendications 1 à 12, dans laquelle la première partie du corps moulé (117) comportant une paroi (147) périphérique pour entourer latéralement la deuxième partie du corps moulé (119).
